# EUROPEAN PATENT APPLICATION

(11) **EP 3 866 418 A1**
(43) Date of publication of application: **18.08.2021**
(21) Application number: 20157453.0
(22) Date of filing: 14.02.2020
(51) Int. Cl.: H04L 12/863, H04L 12/861

(54) **METHOD FOR AN IMPROVED TRAFFIC SHAPING AND/OR MANAGEMENT OF IP TRAFFIC IN A PACKET PROCESSING SYSTEM, TELECOMMUNICATIONS NETWORK, NETWORK NODE OR NETWORK ELEMENT, PROGRAM AND COMPUTER PROGRAM PRODUCT**

(71) Applicant: Deutsche Telekom AG, 53113 Bonn (DE); Technische Universität Darmstadt, 64289 Darmstadt (DE)
(72) Inventor: NOBACH, Leonhard, 55120 Mainz (DE); KUNDEL, Ralf, 64289 Darmstadt (DE)
(74) Representative: Schwöbel, Thilo K.

(57) **Abstract**

The invention relates to a method for an improved traffic shaping and/or management of IP traffic in a packet processing system, especially as part of a telecommunications network, wherein the packet processing system comprises a traffic shaping processor, wherein, in order to provide for an improved traffic shaping and/or management of IP traffic, a scheduling operation is performed, by the traffic shaping processor, prior to egressing the data packets, respectively, from the packet processing system, and the method comprises the following steps:
-- in a first step, non-empty queues are searched regarding a first group of queues of the plurality of different queues, comprising a natural number n of queues, this first group of queues having pieces of queue identifier information in a range from an initial queue identifier information until a final queue identifier information,
-- in a second step, subsequent to the first step, the traffic shaping processor detects or decides - at a first point in time - whether one or a plurality of non-empty queues is part of the first group of queues, wherein,
-- if this is the case, a specific queue identification information of a considered non-empty queue within the first group of queues is identified - at a second point in time -, the considered non-empty queue comprising at least one data packet or data packets according to a sequence of data packets within that queue, and wherein
-- otherwise, a further non-empty queue is searched among the plurality of different queues,

-- in a third step, subsequent to the second step, regarding the considered non-empty queue within the first group of queues, the traffic shaping processor detects or decides - at a third point in time - whether one considered data packet of the at least one data packet or data packets of the considered non-empty queue is permitted or allowed, in view of the scheduling operation of the traffic shaping processor, to be sent or egressed from the traffic shaping processor.

## Description

### BACKGROUND

The present invention relates a method for an improved traffic shaping and/or management of IP traffic in a packet processing system, especially as part of a telecommunications network, wherein the packet processing system comprises a traffic shaping processor.

Furthermore, the present invention relates to a telecommunications network for an improved traffic shaping and/or management of IP traffic in a packet processing system, especially as part of a telecommunications network, wherein the packet processing system comprises a traffic shaping processor.

Additionally, the present invention relates to a network node or network element for an improved traffic shaping and/or management of IP traffic in a packet processing system, especially as part of a telecommunications network, wherein the packet processing system comprises a traffic shaping processor.

Furthermore, the present invention relates to a program, and a computer program product for an improved traffic shaping and/or management of IP traffic in a packet processing system.

The exchange of packetized information in broadband communication systems or telecommunications networks, both in fixed-line as in wireless communication systems (or fixed-line communication networks and mobile communication networks) has already grown dramatically and probably will also grow in the future, especially due to the rapid spread of various data services as well as applications in such communication networks.

Currently, network packet processing chips or integrated circuits are used to process and forward payload to serve subscribers connected to a telecommunications network. For such a use case, i.e. typically in downstream direction, there are a number of challenges to address, especially in order to appropriately realize a queueing (or shaping) functionality which is (generally) necessary to fully utilize a considered network connection. Additionally, in a network operator's access network, one or more queues are typically required for each customer and these queues (or at least part thereof) are likely to be comparatively large, corresponding to as much as up to 100 milliseconds of data (i.e. the data volume in a time interval of 100 milliseconds in a requested customer data stream having a bandwidth of 100 Mbit/s would correspond approximately to 1,25 MB). Especially in case that a comparatively large number of customer and/or of queues (of data packets) are to be served, e.g. at or by a specific network node within the telecommunications network, this amounts to managing a quite huge number of different queues as well as a comparatively large data volume. Moreover, queueing (or traffic shaping) is required in networking devices in order to buffer data packets until these should (or can) be sent. Typically, this is very important before network links with limited bandwidth in order to ensure a comparatively high link utilization (typically almost 100%) and at the same time to ensure that the bandwidth limit is not exceeded. However, due to the large number of different queues, not every queue is filled at a considered point in time, i.e. contains at least one data packet.

However, it needs to be assured that a data packet that is permitted to be sent out (in view of a scheduling functionality applied) is quickly detected and processed.

Hence, a solution is required to efficiently manage the multitude of queues as well as their corresponding data content.

### SUMMARY

An object of the present invention is to provide a technically simple, effective and cost effective solution for an improved traffic shaping and/or management of IP traffic in a packet processing system, especially as part of a telecommunications network. A further object of the present invention is to provide a corresponding telecommunications network, a corresponding system, and a corresponding program and computer program product.

The object of the present invention is achieved by a method for an improved traffic shaping and/or management of IP traffic in a packet processing system, especially as part of a telecommunications network, wherein the packet processing system comprises a traffic shaping processor,
wherein each one of the data packets handled by the traffic shaping processor are assigned, respectively, to a specific queue out of a plurality of different queues, wherein, at a considered point in time, only a part of the plurality of different queues are non-empty queues or comprise at least one data packet being assigned to the respective queue, each one of the different queues being specified by means of a queue identification information,
wherein, in order to provide for an improved traffic shaping and/or management of IP traffic, a scheduling operation is performed, by the traffic shaping processor, prior to egressing the data packets, respectively, from the packet processing system, and the method comprises the following steps:
-- in a first step, non-empty queues are searched regarding a first group of queues of the plurality of different queues, comprising a natural number n of queues, this first group of queues having pieces of queue identifier information in a range from an initial queue identifier information until a final queue identifier information,
-- in a second step, subsequent to the first step, the traffic shaping processor detects or decides - at a first point in time - whether one or a plurality of non-empty queues is part of the first group of queues, wherein,
   -- if this is the case, a specific queue identification information of a considered non-empty queue within the first group of queues is identified - at a second point in time -, the considered non-empty queue comprising at least one data packet or data packets according to a sequence of data packets within that queue, and wherein
   -- otherwise, a further non-empty queue is searched among the plurality of different queues,
-- in a third step, subsequent to the second step, regarding the considered non-empty queue within the first group of queues, the traffic shaping processor detects or decides - at a third point in time - whether one considered data packet of the at least one data packet or data packets of the considered non-empty queue is permitted or allowed, in view of the scheduling operation of the traffic shaping processor, to be sent or egressed from the traffic shaping processor, wherein,
   -- if this is the case, the considered data packet or data packets is sent by or egressed from the traffic shaping processor, and a further non-empty queue is searched among the plurality of different queues, wherein,
   -- otherwise, the at least one considered data packet remains part of the considered non-empty queue, and a further initial queue identifier information is generated or determined, by the traffic shaping processor or by means of performing the scheduling operation, and the first step is performed regarding a second group of queues of the plurality of different queues instead of the first group of queues in order to search non-empty queues, the second group of queues comprising a further natural number m of queues, this second group of queues having pieces of queue identifier information in a range from a further initial queue identifier information until a further final queue identifier information.

It is thereby advantageously possible according to the present invention to quickly and efficiently determine the next data packet to be sent by the packet processing system, especially by the traffic shaping processor, even though a number of queues has to be gone through that typically exceeds 100.000. This is especially important if the bandwidth to be handled is growing; e.g. in case of a 100Gbit/s communication link and an average packet size of 1200 bytes (i.e. approximately 10.000 bits), in average roughly every 100 nanoseconds the next data packet needs to be sent or egressed. If a clock frequency of the processor core of the traffic shaping processor is assumed to correspond, roughly, to about 1 GHz, 100 nanoseconds approximately correspond to about 100 clock cycles.

Network operators such as internet service providers typically have to queue/shape network packets on their way to their customers. This means that packets, e.g. at specific network nodes within the telecommunications network (typically at specific network nodes of the broadband access network) such as broadband network gateways, are briefly buffered (typically less than 100 milliseconds) and then sent at a constant (or predefined) rate to the residential gateway (e.g. customer premises equipment) through the access network (e.g. comprising network components such as optical line terminals (OLT) and/or multi-service access nodes (MSAN). Such a queueing operation (or traffic shaping operation) is (generally) necessary to fully utilize a network connection. However, the requirements vary greatly depending on the scenario. For example, in data centers, all packets can usually be processed by the same queue and usually only a few microseconds can (and need to) be buffered, whereas in the afore mentioned telecommunications network, especially access networks, one or more queues are required for each customer and these queues are typically much larger or deeper (typically up to 100 ms). Especially for network operators and/or internet service providers this poses great challenges in the downstream direction (i.e. for data packets going in the direction to or towards the customer or the residential gateway). For each such customer, there are typically a plurality of queues required (especially up to eight different queues; however this number may vary among different network operators or service providers) to allow for (or to map) different priorities (e.g. VoIP, IPTV, normal "best effort" traffic). Additionally, many customers (typically many thousand customers, and often exceeding 10,000) are terminated on the same network node (such as a broadband network gateway) which requires a very high number of queues to be processed or handled by such a network node. Under the assumption of 30.000 customers and 8 queues per customer, 240.000 queues need to be handled; however, only a very small part of these queues - at specific considered points in time - are actually non-empty, i.e. do comprise (or buffers or queues) data packets at all (at the considered point in time). According to the present invention, a solution is provided how to quickly and efficiently determine the next data packet to be sent or to be egressed by the traffic shaping processor, of the packet processing system.

Regarding buffering or storing data volume associated to different data packets and/or queues, the following different available memory technologies are to be considered: SRAM (static random access memory) and DRAM (dynamic random access memory). SRAM is typically relatively small and expensive, which means that chips typically have less than 50 MB or storage volume; however, this kind of memory can be integrated into a processor or an ASIC (application specific integrated circuit) of a network switching chip, and provides the possibility to realize very low access times; additionally, this memory can be used and is used as an external chip (also comparatively small memory sizes). DRAM is usually installed separately from the processor or ASIC used, since the latter typically has a different manufacturing process. However, there are also approaches to build two different chips (processor + DRAM) into one housing (providing the possibility of a so-called high bandwidth memory, HBM); in general, DRAM memory (or memory units) are comparatively large (typically in excess of 4GB), however, the access times (until information is available) are high.

According to the present invention, an improved traffic shaping and/or management of IP traffic is possible in a packet processing system, especially as part of a telecommunications network, the packet processing system comprising a traffic shaping processor. Each one of the data packets handled by the traffic shaping processor is assigned, respectively, to a specific queue out of a plurality of different queues, i.e. there is a multitude of different queues, typically in excess of 200.000, and each data packet of the stream of data packets traversing or being handled by the considered network node is assigned to a specific one of these different queues. Due to the comparatively high number of different queues, at a considered point in time, only a part of the plurality of different queues are non-empty queues, i.e. comprise at least one data packet being assigned to the respective queue. Typically, each one of the different queues is or is able to be specified by means of a - typically unique - identifier, such as a queue identification information.

According to the present invention, in order to provide for an improved traffic shaping and/or management of IP traffic, a scheduling operation is performed, by the traffic shaping processor, prior to egressing the data packets, respectively, from the packet processing system, the method comprising the following steps:

In the first step, in order to quickly and efficiently search for non-empty queues, a first group of queues of the plurality of different queues is defined (or considered), wherein the first group of queues comprises a natural number n of queues, and wherein this first group of queues has (or is related to) pieces of queue identifier information (especially continuously regarding the queue identifier information) in a range from an initial queue identifier information until a final queue identifier information, i.e. the first group of queues is typically defined by means of the continuous range of queue identifier information from the initial one to the final one.

In the second step, subsequent to the first step, the traffic shaping processor detects or decides (in a first sub-step and especially acting on the considered first group of queues at once) - at a first point in time - whether one or a plurality of non-empty queues is part of the first group of queues (or whether, to the contrary, all considered individual queues of the first group of queues are - at the considered point in time - empty queues). If one or a plurality of non-empty queues is part of the first group of queues, it needs to be determined (in a second sub-step) which queue or queues (of the considered first group of queues) actually is (or are) non-empty; i.e. a specific queue identification information of a considered non-empty queue needs to be determined (or identified) - at a second point in time - within the first group of queues (the considered non-empty queue comprises at least one data packet or a plurality of data packets according to a sequence of data packets within that queue). Otherwise (i.e. in case no non-empty queue is part of the first group of queues, which corresponds to all queues of the first group of queues being empty), a further non-empty queue is searched among the plurality of different queues (typically defining, in a repetition of the first step, the next "first group of queues", or further group of queues (this next first group (or further group) of queues typically starting subsequent to the final queue identifier information of the all-empty first group of queues just considered), and performing the second step on this next "first group of queues", and repeating this procedure until a "first group of queues" comprising non-empty queues is found).

In the third step, subsequent to the second step, regarding the considered non-empty queue within the first group of queues, the traffic shaping processor detects or decides - at a third point in time - whether one considered data packet of the at least one data packet or data packets of the considered non-empty queue is permitted or allowed, in view of the scheduling operation of the traffic shaping processor, to be sent or egressed from the traffic shaping processor, wherein,
-- if this is the case, the considered data packet or data packets is sent by or egressed from the traffic shaping processor, and a further non-empty queue is searched among the plurality of different queues (typically starting at the queue identifier information of or subsequent to the considered non-empty queue), wherein,
-- otherwise, the at least one considered data packet remains part of the considered non-empty queue, and a further initial queue identifier information is generated or determined, by the traffic shaping processor or by means of performing the scheduling operation, and the first step is performed regarding a second group of queues of the plurality of different queues instead of the first group of queues in order to search non-empty queues, the second group of queues comprising a further natural number m of queues, this second group of queues having pieces of queue identifier information in a range from the further initial queue identifier information until a further final queue identifier information.

Data packets according to the present invention are especially, but not necessarily, IP traffic packets, or Ethernet packets, or GEM (GPON encapsulation method) frames - all of which typically also comprise IP traffic packets. Conventionally known hardware switches commonly process packets using a special ASIC which is only designed for packet processing and forwarding.

According to the present invention, it is preferred that the data packets transmitted by the packet processing system are at least partly egressed by the traffic shaping processor, using a packet buffering unit, i.e. regarding such egressed data packets (egressed by the traffic shaping processor), the packet buffering unit is (or has been) involved in (previously) storing or buffering - externally or separately to the traffic shaping processor - at least a part of such data packets, even though the actual egressing operation regarding such data packets is actually performed by the traffic shaping processor alone, i.e. the packet buffering unit is typically not involved in the egressing operation.

The telecommunications network according to the present invention might be a fixed-line telecommunications network or a mobile communication network but preferably is a telecommunications network having both aspects (or parts) of a fixed-line telecommunications network (or being a fixed-line telecommunications network in such parts) and aspects (or parts) of a mobile communication network (or being a mobile communication network in such parts); such networks are also known under the term fixed-mobile-convergence networks (FMC networks).

According to the present invention, it is advantageously possible and preferred that the further non-empty queue being searched among the plurality of different queues according to the second or according to the third step, corresponds to performing the first step considering a further group of queues of the plurality of different queues instead of the first group of queues, the further group of queues comprising still a further natural number k of queues, this further group of queues having pieces of queue identifier information in a range from a still further initial queue identifier information until a still further final queue identifier information, wherein the still further initial queue identifier information corresponds to the subsequent queue compared to the final queue identifier information in case of searching the further non-empty queue according to the second step, or to the subsequent queue compared to the queue identifier information of the considered non-empty queue within the first group of queues in case of searching the further non-empty queue according to the third step.

It is thereby advantageously possible to quickly and efficiently search through the plurality of different queues, by means of considering, group by group, a certain number of queues, it is possible to quickly determine that a group exclusively comprises empty queues, and to turn to the next group of queues. Hence, the quite large number of different queues to be searched for data packets potentially able to be sent or egressed by the traffic shaping processor can be gone through in a very efficient manner.

According to the present invention, it is advantageously furthermore possible and preferred that the plurality of different queues is divided up in groups of queues, each group of queues comprising a natural number p of queues,
wherein the natural number p of queues within each such group of queues especially corresponds to between 30 and 5000 queues, preferably 32, or 64, or 128, or 256, or 512, or 1024, or 2024, or 4048 queues.

According to the present invention, it is thereby advantageously possible that, at maximum, the natural number p of queues is able to be checked for non-empty queues very quickly.

According to the present invention, it is advantageously possible and preferred that the traffic shaping processor comprises - besides a queue memory, the queue memory storing a representation of the plurality of different queues, and comprising at least a reference information regarding data packets being part, respectively, of different queues - a filled queue memory regarding the plurality of different queues, the filled queue memory indicating non-empty queues, wherein each queue of the plurality of different queues is represented in the filled queue memory, wherein the representation regarding each queue especially corresponds to a binary digit whose value is dependent on whether the respective queue is empty or non-empty.

Furthermore, it is advantageously possible and preferred according to the present invention that non-empty queues are searched, regarding a considered group of queues, by means of detecting or deciding whether, in the filled queue memory, all the binary digits - corresponding to the considered group of queues - correspond to empty queues, or whether there are, in the filled queue memory, one or a plurality of binary digits - corresponding to the considered group of queues - whose value or values correspond to at least one non-empty queue,
wherein especially such a determination, regarding a considered group of queues, only requires one or two or three or four clock cycles of the traffic shaping processor and/or wherein only one or two or three or four or five of six clock cycles of the traffic shaping processor occur between the first and second point in time of the second step.

By means of using the filled queue memory (besides the queue memory), and especially by means of using one or a plurality of binary digits (especially one binary digit, e.g. binary "0" as value in the filled queue memory representing a certain queue being empty, and binary "1" as value in the filled queue memory representing another queue being non-empty), it is advantageously possible to check a number or group of queues for non-empty queues in a particularly quick and efficient manner. A particularly efficient implementation is possible, according to the present invention, by means of loading or transferring the binary digits (within the filled queue memory) for a considered group of queues into a register or another processor memory, and performing the check of the first sub-step of the second step (i.e. the determination whether there is a binary "1" at all or whether all binary digits are "0"). In order for this to be processed as efficient as possible, the natural number p of queues (i.e. the maximum number of queues within a considered group of queues) especially corresponds to the word length (i.e. the number of bits a processor is able to process simultaneously) of the traffic shaping processor.

Furthermore, and according to an alternative embodiment of the present invention, it is preferred that the natural number n, and/or the natural number m, and/or the natural number k
-- either corresponds to or is equal to the natural number p in which case the first group of queues and/or the second group of queues and/or the further group of queues is or corresponds to an integral group of queues, having the natural number p of queues,
-- or corresponds to less than the natural number p of queues in which case the first group of queues and/or the second group of queues and/or the further group of queues is or corresponds to a partial group of queues, wherein, within a partial group of queues, a further non-empty queue is searched by means of performing a masking operation when considering a corresponding integral group of queues, thereby ignoring a part of the queues of the integral group of queues, and considering only masked queues, wherein especially the masking operation is performed using a mask information, wherein the mask information comprises a binary digit for each queue of a considered group of p queues of which the considered partial group of queues is a part, wherein the value of the binary digits of the mask information for queues corresponding to the considered partial group of queues differs from the value of the binary digits of the mask information for queues not belonging to the considered partial group of queues.

Thereby, it is advantageously possible to both use integral groups of queues in order to progress faster through the plurality of different queues, and partial groups such that groups of queues can be checked and handled, using a finer granularity.

According to a further preferred embodiment of the present invention, the detection or decision - at the third point in time - whether one considered data packet is permitted or allowed, in view of the scheduling operation of the traffic shaping processor, to be sent or egressed from the traffic shaping processor, is dependent on a hierarchical scheduling or hierarchical rate-limiting, especially comprising 2 or 3 or 4 or 5 or 6 or 7 hierarchical layers or levels, wherein especially in case of the sending or egressing operation regarding the one considered data packet fails due to the scheduling operation of the traffic shaping processor, the scope of the failing reason - within the plurality of different queues - is able to be determined by the traffic shaping processor and/or its scheduling operation such that the next non-failing queue, or its corresponding queue identification information is able to be determined, leading to the generation or determination of the further initial queue identifier information.

It is thereby advantageously possible to efficiently apply the scheduling operation as well as perform the egressing operation from the traffic shaping processor.

Furthermore, the present invention relates to a telecommunications network for an improved traffic shaping and/or management of IP traffic in a packet processing system, especially as part of the telecommunications network, wherein the packet processing system comprises a traffic shaping processor,
wherein each one of the data packets handled by the traffic shaping processor are assigned, respectively, to a specific queue out of a plurality of different queues,
wherein only a part of the plurality of different queues are non-empty queues or comprise at least one data packet being assigned to the respective queue, each one of the different queues being specified by means of a queue identification information,
wherein, in order to provide for an improved traffic shaping and/or management of IP traffic, the telecommunications network is configured such that a scheduling operation is performed, by the traffic shaping processor, prior to egressing the data packets, respectively, from the packet processing system, and the telecommunications network is furthermore configured such that:
-- non-empty queues are searched regarding a first group of queues of the plurality of different queues, comprising a natural number n of queues, this first group of queues having pieces of queue identifier information in a range from an initial queue identifier information until a final queue identifier information,
-- the traffic shaping processor detects or decides whether one or a plurality of non-empty queues is part of the first group of queues, wherein,
   -- if this is the case, a specific queue identification information of a considered non-empty queue within the first group of queues is identified, the considered non-empty queue comprising at least one data packet or data packets according to a sequence of data packets within that queue, and wherein
   -- otherwise, a further non-empty queue is searched among the plurality of different queues,
-- regarding the considered non-empty queue within the first group of queues, the traffic shaping processor detects or decides whether one considered data packet of the at least one data packet or data packets of the considered non-empty queue is permitted or allowed, in view of the scheduling operation of the traffic shaping processor, to be sent or egressed from the traffic shaping processor, wherein,
   -- if this is the case, the considered data packet is sent by or egressed from the traffic shaping processor, and a further non-empty queue is searched among the plurality of different queues, wherein,
   -- otherwise, the at least one considered data packet remains part of the considered non-empty queue, and a further initial queue identifier information is generated or determined, by the traffic shaping processor or by means of performing the scheduling operation, and the first step is performed regarding a second group of queues of the plurality of different queues instead of the first group of queues in order to search non-empty queues, the second group of queues comprising a further natural number m of queues, this second group of queues having pieces of queue identifier information in a range from a further initial queue identifier information until a further final queue identifier information.

Furthermore, the present invention relates to a network node or network element, especially broadband network gateway element, for an improved traffic shaping and/or management of IP traffic in a packet processing system, especially as part of a telecommunications network, the network node or the network element comprising the packet processing system, wherein the packet processing system comprises a traffic shaping processor,
wherein each one of the data packets handled by the traffic shaping processor are assigned, respectively, to a specific queue out of a plurality of different queues, wherein only a part of the plurality of different queues are non-empty queues or comprise at least one data packet being assigned to the respective queue, each one of the different queues being specified by means of a queue identification information,
wherein, in order to provide for an improved traffic shaping and/or management of IP traffic, the telecommunications network is configured such that a scheduling operation is performed, by the traffic shaping processor, prior to egressing the data packets, respectively, from the packet processing system, and the telecommunications network is furthermore configured such that:
-- non-empty queues are searched regarding a first group of queues of the plurality of different queues, comprising a natural number n of queues, this first group of queues having pieces of queue identifier information in a range from an initial queue identifier information until a final queue identifier information,
-- the traffic shaping processor detects or decides whether one or a plurality of non-empty queues is part of the first group of queues, wherein,
   -- if this is the case, a specific queue identification information of a considered non-empty queue within the first group of queues is identified, the considered non-empty queue comprising at least one data packet or data packets according to a sequence of data packets within that queue, and wherein
   -- otherwise, a further non-empty queue is searched among the plurality of different queues,
-- regarding the considered non-empty queue within the first group of queues, the traffic shaping processor detects or decides whether one considered data packet of the at least one data packet or data packets of the considered non-empty queue is permitted or allowed, in view of the scheduling operation of the traffic shaping processor, to be sent or egressed from the traffic shaping processor, wherein,
   -- if this is the case, the considered data packet is sent by or egressed from the traffic shaping processor, and a further non-empty queue is searched among the plurality of different queues, wherein,
   -- otherwise, the at least one considered data packet remains part of the considered non-empty queue, and a further initial queue identifier information is generated or determined, by the traffic shaping processor or by means of performing the scheduling operation, and the first step is performed regarding a second group of queues of the plurality of different queues instead of the first group of queues in order to search non-empty queues, the second group of queues comprising a further natural number m of queues, this second group of queues having pieces of queue identifier information in a range from a further initial queue identifier information until a further final queue identifier information.

Still additionally, the present invention relates to a program comprising a computer readable program code which, when executed on a computer and/or on a network node of a telecommunications network and/or on a packet processing system and/or on an ASIC, or in part on a network node of a telecommunications network and in part on a packet processing system and/or in part on an ASIC, causes the computer and/or the network node of a telecommunications network and/or the packet processing system or the ASIC to perform the inventive method.

Furthermore, the present invention relates to a computer program product for an improved traffic shaping and/or management of IP traffic in a packet processing system, the computer program product comprising a computer program stored on a storage medium, the computer program comprising program code which, when executed on a computer and/or on a network node of a telecommunications network and/or on a packet processing system and/or on an ASIC, or in part on a network node of a telecommunications network and in part on a packet processing system and/or in part on an ASIC, causes the computer and/or the network node of a telecommunications network and/or the packet processing system or the ASIC to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates a packet processing system according to the present invention, comprising a packet switching processor, and a traffic shaping processor, especially as part of a traffic shaping entity.
Figure 2 schematically illustrates a representation of further details of a traffic shaping processor according to the present invention.
Figure 3 schematically illustrates the traffic shaping processor with a queue memory, and a filled queue memory.
Figure 4 schematically represents the inventive method of quickly and efficiently determining data packets to be sent out or egressed from the traffic shaping processor.

### DETAILED DESCRIPTION

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

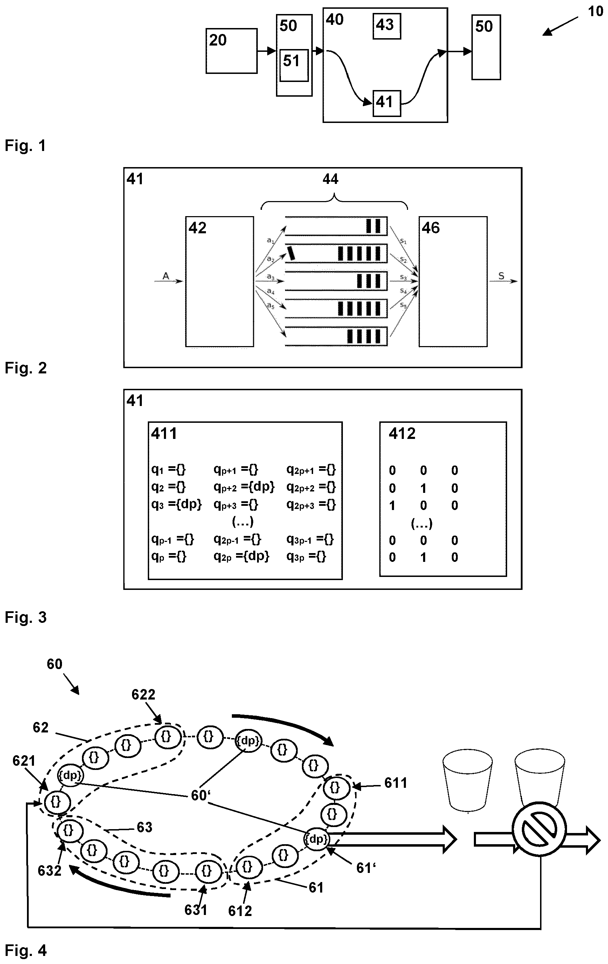

In Figure 1, a packet processing system 10 according to the present invention is schematically illustrated. The packet processing system 10 comprises a traffic shaping entity 40 comprising a traffic shaping processor 41. In the exemplary embodiment shown in Figure 1, the traffic shaping entity 40 also comprises a packet buffering unit 43. Furthermore, the packet processing system 10 is represented, in Figure 1, comprising a packet switching processor 20 providing data packets 50 to the traffic shaping entity 40. The traffic shaping entity 40 is especially able to handle a multitude of different queues (typically more than 100.000), and different pieces of runtime configuration information (such as, e.g., a transmission rate to be applied, a burst size per queue, etc.), as well as an arbiter or algorithm. Data packets 50 (comprising, as usual, a MAC information or MAC address (media access control address), an (or a plurality of) IP address indication(s) or information, a payload portion, etc.) are schematically represented, in Figure 1, at different points in the IP traffic packet processing chain through the packet processing system 10: a first IP traffic packet 50 is schematically shown between the packet switching processor 20 (or packet switching processor part 20 of the packet processing system 10), and the traffic shaping entity 40 (or traffic shaping entity part 40 of the packet processing system), wherein this first IP traffic packet 50 is schematically shown as having a queue identification information 51. A second IP traffic packet 50 is schematically shown after the traffic shaping entity 40, i.e. after the traffic shaping processor 41; especially, the second IP traffic packet 50 has the queue identification information 51 removed. Typically, the traffic shaping processor 41 and the packet buffering unit 43 are exchanging data, especially related to the information content of data packets to be stored or buffered in the packet buffer unit 43.

Figure 2 schematically illustrates a representation of further details of a traffic shaping processor 41 according to the present invention. The traffic shaping processor 41 comprises a first part 42 (or first module or first component), corresponding to or implementing a classifier or queue management algorithm. Inputs (or ingresses) (schematically denoted by reference sign A in Figure 2) to the traffic shaping processor 41 are provided to the first part 42. The traffic shaping processor 41 furthermore also comprises a second part 46 (or second module or second component), corresponding to or implementing a scheduling algorithm. Output (or egresses) (schematically denoted by reference sign S in Figure 2) from the traffic shaping processor 41 are provided by the second part 46. The traffic shaping processor 41 furthermore also comprises a queue part 44 or queue element. Each queue (five of which are schematically represented in Figure 2, but shown without an individual, respective reference sign) of the queue part 44 comprises an input side (schematically represented on the left hand side in Figure 2) and an output side (schematically represented on the right hand side in Figure 2). The processing of (payload) data, especially data packets and within the traffic shaping processor 41 can schematically be understood as follows: The first part 42 receives the incoming (or ingressing) data packets (collectively denoted by reference sign A), and distributes the incoming packets to the different queues of the queue part 44 as individual inputs a₁, a₂, a₃, a₄, as of the different queues of the queue part 44. The second part 46 takes individual data packets from the different queues of the queue part 44 as individual inputs s₁, s₂, s₃, s₄, s₅ of the different queues of the queue part 44, and provides the resulting traffic (or egressing) as data packets (collectively denoted by reference sign S) to the egress of the traffic shaping processor 41 (and, as a consequence, to the egress of the packet processing system 10.

According to the present invention, a method for an improved traffic shaping and/or management of IP traffic in a packet processing system 10 is provided. The packet processing system 10 comprises a traffic shaping processor 41, and each one of the data packets handled by the traffic shaping processor 41 are assigned, respectively, to a specific queue out of a plurality of different queues.

The different queues are schematically represented in Figure 4 by means of different circles, each one comprising a set symbol. Most of the circles comprise the symbol "{}" for the empty set, indicating that the corresponding queue is an empty queue, i.e. it does (at the considered point in time) not comprise any data packets. Some of the circles comprise a symbol "{dp}", denoting that the corresponding queue is non-empty, i.e. comprises at least one data packet, i.e. one data packet or a plurality of data packets - these non-empty queues are also referred to, in the context of the present disclosure, by means of reference sign 60'; even though "dp" is printed only once, it is meant that such a (non-empty) queue might comprise one data packet (i.e. one and only one data packet), or that it might comprise a plurality of data packets, i.e. at least two data packets, but, typically, a plurality of, e.g., many tens or even many hundreds of data packets. Each of the different queues are represented, in Figure 4, as being located within a circle, the circle denoting the queue identification information (or another or different identifier that unambiguously identifies the respective queue). The processing regarding egressing operation within the traffic shaping processor 41 is performed by continuously going through the different queues, hence the two curved and bold arrows denoting that, during a sufficiently long time, all the different queues 60 will be considered. This is important as, of course, the content of the queues is not static but is dynamically updated, i.e. the state "empty queue" (for an arbitrary queue among the different queues 60 and at a considered point in time) changes to the state "non-empty queue" (at a subsequent point in time) in case a data packet has arrived and assigned to that considered queue. Figure 4 also shows a first group of queues 61, the first group of queues 61 comprising one non-empty queue 61'. Furthermore, Figure 4 shows a second group of queues 62, and a further group of queues 63. The queues 60 as well as the groups of queues 61, 62, 63 are primarily handled by means of the respective queue identification information relating to these queues (or groups of queues). As can therefore be seen from Figure 4, each one of these groups of queues 61, 62, 63 comprises or is defined by means of an initial (or starting) queue or queue identification information, and a final (or ending) queue or queue identification information. Hence, regarding the first group of queues 61, an initial queue identifier information 611 and a final queue identifier information 612 is schematically shown; regarding the second group of queues 62, a further initial queue identifier information 621 and a further final queue identifier information 622 is schematically shown; regarding the further group of queues 63, a still further initial queue identifier information 631 and a still further final queue identifier information 632 is schematically shown.

According to the present invention, in the first step, non-empty queues are searched regarding the first group of queues 61 of the plurality of different queues, comprising an natural number n of queues, this first group of queues 61 having pieces of queue identifier information in a range from an initial queue identifier information 611 until a final queue identifier information 612. In the second step, the traffic shaping processor 41 detects or decides whether one or a plurality of non-empty queues 61' is part of the first group of queues 61, wherein as this is the case (as is shown in Figure 4), the specific queue identification information of the considered non-empty queue 61' (within the first group of queues 61) is identified, and the considered non-empty queue 61' (i.e. comprising at least one data packet or data packets according to a sequence of data packets within that queue) further processed in the third step. In the third step, regarding the considered non-empty queue 61' within the first group of queues 61, the traffic shaping processor 41 detects or decides whether the content or part of the content of that considered non-empty queue 61' (i.e. one considered data packet of the at least one data packet or data packets of the considered non-empty queue) is permitted or allowed, in view of the scheduling operation of the traffic shaping processor, to be sent or egressed from the traffic shaping processor. In the representation of Figure 4, it is assumed that this is finally not the case, i.e. the scheduling operation block the transmission or egressing of the respective data packet or data packets. Hence, (as the data packet or plurality of data packets has or have not been sent) the considered data packet remains (or the data packets remain) part of the considered non-empty queue 61', and a further initial queue identifier information 621 is generated or determined, by the traffic shaping processor or by means of performing the scheduling operation. This is represented in Figure 4 by means of a folded arrow being directed to the further initial queue identification information 621, indicating the second group of queues 62. Subsequently, the first step is performed regarding a second group of queues 62 instead of the first group of queues 61 in order to search non-empty queues.

In Figure 3, a part of the memory organization of the traffic shaping processor 41 is schematically shown according to an exemplary embodiment: The traffic shaping processor 41 comprises - besides a queue memory 411 - a filled queue memory 412 regarding the plurality of different queues 60. The queue memory 411 stores a representation of the plurality of different queues 60, and comprises at least a reference information regarding data packets being part, respectively, of different queues 60. The filled queue memory 412 indicates non-empty queues, wherein each queue of the plurality of different queues 60 is represented, in the filled queue memory 412, and wherein the representation regarding each queue especially corresponds to a binary digit whose value is dependent on whether the respective queue is empty or non-empty.

Figure 3 especially shows the example of different queues 60 being arranged - both within the queue memory 411 and within the filled queue memory 412 - in (or according to) a table, the table having a natural number p of rows, and furthermore a first column being related to the p queues q₁ to qₚ, the second column being related also to p queues, namely to queues qₚ₊₁ to q₂ₚ, and the third column being likewise related to p queues q₂ₚ₊₁ to q₃ₚ. In the first column, the third queue q₃ is non-empty, in the second column, the second and last queues q₂ and q₂ₚ are non-empty, whereas all other queues in the first and second column as well as all queues in the third column are empty. Reflecting, within the filled queue memory 412, the distribution (or arrangement) of empty queues and non-empty queues (or their "emptiness" and "non-emptiness") stored or referred to in queue memory 411, also the filled queue memory 412 has or refers to the queues of the queue memory 411, i.e. it might also be understood as having "three columns" of binary (one-digit) values, all entries have a value of binary "0" (of course corresponding to all the empty queues in queue memory 411), except the third value of the first column (of course corresponding to the third queue q₃), as well as the second and last value of the second column (of course corresponding to the second and last queues q₂ and q₂ₚ of this second column).

Hence, the present invention provides a solution to the problem of searching and/or determining the next data packet to be sent or to be egressed by the traffic shaping processor 41 in a quick and efficient manner, i.e. typically in less than 100 nanoseconds. This also means that, typically, a rather naïve approach of implementing some pseudocode along the lines of:

```
 "for each q in queues:
    if q unequal to 'empty':
       take the first data packet
       ask scheduler whether sending this data packet is allowed"
```

will not be sufficiently fast - at least in case a sufficiently large number of queues is involved and needs to be handled (Example: assuming that the number of queues to be handled is large (e.g. larger than 100.000 or larger than 200.000) and that a queue can be checked in every clock cycle of the processor handling this algorithm (assuming a clock cycle of one nanosecond, or a clock frequency of 1 GHz), and a packet being stored or present in every thousandth (1.000^{th}) queue (i.e. all the other 999 queues are empty), a data packet can only be sent every 1000 nanoseconds, i.e. resulting in a 100 Gbit/s communication being only used at 10% of its capacity (when a packet size of 1200 bytes is assumed; in case of using FPGA (field programmable gate arrays) having typically still a lower clock frequency (of typically less than 500 MHz or even 350 MHz), this situation is even worsened). Hence, such a rather naive implementation does not sufficiently scale with the number of queues typically required to be handled in application scenarios according to the present invention.

Additionally, a further challenge is that not only a non-empty queue needs to be found very quickly, but the sending or egressing of the corresponding (at least one) data packet within such a non-empty queue also needs to be allowed - by the scheduler or the scheduling process or functionality to be sent by (or egressed from) the traffic shaping processor 41 - in order for the general scheduling functionality or queue handling to go ahead. Due to the hierarchical organization of the access network within the telecommunications network (which is designed (or implemented) weaker (due to applying an "oversubscription") than the theoretically possible maximum load caused in a hypothetical situation of all subscribers (or clients) requesting their contractual bandwidth completely), bottlenecks may occur here.
For example: an MSAN (multi service access node, typically the greyish box located, e.g., in residential streets) serves 200 customers, each having (contractually, or potentially) a bandwidth of 100 Mbit/s, but this MSAN is only connected by means of a 10 Gbit/s communication link with its corresponding BNG (broadband network gateway). If only 100 customers are fully utilizing their downstream capacity, this link is fully utilized. If more than 100 customers use their bandwidth fully at the same time, the scheduler of the BNG (i.e. the corresponding traffic shaping processor 41) reduces the rate per customer (of these between 100 and 200 customers) so that the 10 Gbit/s of the considered communication link can be maintained. The 200 customers might have 200x8 (=1600) queues, which are typically arranged directly after (next to) each other (i.e. the corresponding queue identification information have continuous values). In such a situation, if a non-empty queue is found (at a considered point in time) among these 1600 queues and the egressing of corresponding data packets is disallowed (by the scheduler), the same result would hold for all other non-empty queues among these considered 1600 queues, i.e. the outer loop of the algorithm would find a non-empty queue, but the scheduler would refuse to send the corresponding data packet(s). According to the present invention, a waste of time regarding such a situation (i.e. finding the next non-empty queue (after having found a preceding non-empty queue whose data packet has been disallowed to be sent) only to establish again (i.e. for or within the same failing scope of queues) that sending a corresponding data packet is disallowed) can advantageously be avoided.

It is advantageously possible and preferred according to the present invention that the filled queue memory 412 is used to efficiently and quickly find the next non-empty queue among all the queues 60 to be handled by the traffic shaping processor 41. Especially, the filled queue memory, only comprises only one bit (having binary values "0" or "1"), indicating whether a corresponding queue is empty (i.e. does not comprise any data packet) or is non-empty (i.e. comprises one data packet or a plurality of data packets). This filled queue memory 412 is required to have at least one bit for every queue to be handled (and often has exactly one bit per queue to be handled); however, this memory is typically organized in portions of memory locations, such as memory pages or groups of memory locations, often corresponding to the word length (i.e. the number of bits a processor is able to process simultaneously; in the context of this disclosure, this corresponds to the natural number p of queues) of the traffic shaping processor, i.e. typically a power of 2 such as 16, 32, 64, 128, 256, 512, or 1024 bits. The bits of one such group of memory locations are able to be handled simultaneously, i.e. within one processor cycle or clock cycle, especially regarding whether all these bits have a value of "0" or not. Hence, by means of checking whole groups of queues for non-empty queues, non-empty queues can be found more quickly (more precisely: faster by a factor corresponding to the natural number of p queues (or bits of the filled queue memory) in an integral group of queues) than performing a check on each queue separately. To determine - within such a group of p queues, or within a partial group of queues, i.e. comprising less than p queues - one non-empty queue (of potentially a plurality of non-empty queues within the considered group of queues) is able to be performed by means of applying a functionality 'first_bit_high' on the considered bits (of the filled queue memory 412) corresponding to the considered group of p (or less than p) queues. This functionality is again able to be applied (or executed) within one processor cycle or clock cycle of the traffic shaping processor 41. If only a partial group of queues is or needs to be considered, it is advantageously possible according to the present invention to used a mask information, or a masking operation (e.g. by performing a logical AND-operation of, on the one hand, the considered bits corresponding to the content of the filled queue memory and involving the number p of bits, and, on the other hand, a mask information consisting of (or corresponding to) a group of the number p of bits where all binary digits corresponding to bits (or queues) to be considered have a value of "1" and all other binary digits have a value of "0", resulting in these latter bits (or corresponding queues) being ignored by performing the AND-operation), and to apply, e.g., the functionality 'first_bit_high' on the result of the masking operation (i.e. the result of the mentioned AND-operation). Again, this procedure (even including a masking operation) is able to be performed very fast, typically within only two processor cycles or clock cycles if not even in only one clock cycle.
If a non-empty queue is found, the scheduler (of the traffic shaping processor 41) is asked whether a packet of this queue may be sent; if yes: send the corresponding data packet (or a plurality of data packets) and update the rate limiter; if no: the scheduler has the information why this data packet may not be sent (e.g. overloaded MSAN) and can give the first queue ID (i.e. the first queue identification information) which does not prohibit sending this packet (e.g. the first queue identification information corresponding to a non-congested MSAN);.this information is passed back (as the further initial queue identifier information 621) to the outer loop, so that the search continues directly at this point and no further filled (or non-empty) queues are found (and unnecessarily processed), e.g. corresponding to the overloaded MSAN, within this limit or failing scope.

Typically, a hardware programming language or framework (and no software in the classical sense) is used to define the scheduling algorithm of the traffic shaping processor 41 (e.g. Verilog/VHDL/... or another hardware description language), and mapped in hardware.

## Claims

1. Method for an improved traffic shaping and/or management of IP traffic in a packet processing system (10), especially as part of a telecommunications network (100), wherein the packet processing system (10) comprises a traffic shaping processor (41),
wherein each one of the data packets (50) handled by the traffic shaping processor (41) are assigned, respectively, to a specific queue out of a plurality of different queues (60),
wherein, at a considered point in time, only a part of the plurality of different queues (60) are non-empty queues (60') or comprise at least one data packet being assigned to the respective queue, each one of the different queues (60) being specified by means of a queue identification information, wherein, in order to provide for an improved traffic shaping and/or management of IP traffic, a scheduling operation is performed, by the traffic shaping processor (41), prior to egressing the data packets (50), respectively, from the packet processing system (10), and the method comprises the following steps:
-- in a first step, non-empty queues (60') are searched regarding a first group of queues (61) of the plurality of different queues (60), comprising a natural number n of queues, this first group of queues (61) having pieces of queue identifier information in a range from an initial queue identifier information (611) until a final queue identifier information (612),
-- in a second step, subsequent to the first step, the traffic shaping processor (41) detects or decides - at a first point in time - whether one or a plurality of non-empty queues (60') is part of the first group of queues (61), wherein,
-- if this is the case, a specific queue identification information of a considered non-empty queue (61') within the first group of queues (61) is identified - at a second point in time -, the considered non-empty queue (61') comprising at least one data packet or data packets according to a sequence of data packets within that queue (61'), and wherein
-- otherwise, a further non-empty queue is searched among the plurality of different queues (60),
-- in a third step, subsequent to the second step, regarding the considered non-empty queue (61') within the first group of queues (61), the traffic shaping processor (41) detects or decides - at a third point in time - whether one considered data packet of the at least one data packet or data packets of the considered non-empty queue (61') is permitted or allowed, in view of the scheduling operation of the traffic shaping processor (41), to be sent or egressed from the traffic shaping processor (41), wherein,
-- if this is the case, the considered data packet or data packets is sent by or egressed from the traffic shaping processor (41), and a further non-empty queue is searched among the plurality of different queues (60), wherein,
-- otherwise, the at least one considered data packet remains part of the considered non-empty queue (61'), and a further initial queue identifier information (621) is generated or determined, by the traffic shaping processor (41) or by means of performing the scheduling operation, and the first step is performed regarding a second group of queues (62) of the plurality of different queues (60) instead of the first group of queues (61) in order to search non-empty queues (60'), the second group of queues (62) comprising a further natural number m of queues, this second group of queues (62) having pieces of queue identifier information in a range from the further initial queue identifier information (621) until a further final queue identifier information (622).

2. Method according to claim 1, wherein the further non-empty queue being searched among the plurality of different queues (60) according to the second or according to the third step, corresponds to performing the first step considering a further group of queues (63) of the plurality of different queues (60) instead of the first group of queues (61), the further group of queues (63) comprising still a further natural number k of queues, this further group of queues (63) having pieces of queue identifier information in a range from a still further initial queue identifier information (631) until a still further final queue identifier information (632), wherein the still further initial queue identifier information (631) corresponds to the subsequent queue compared to the final queue identifier information (612) in case of searching the further non-empty queue according to the second step, or to the subsequent queue compared to the queue identifier information of the considered non-empty queue (61') within the first group of queues (61) in case of searching the further non-empty queue according to the third step.

3. Method according to one of the preceding claims, wherein the plurality of different queues (60) is divided up in groups of queues, each group of queues comprising a natural number p of queues,
wherein the natural number p of queues within each such group of queues especially corresponds to between 30 and 5000 queues, preferably 32, or 64, or 128, or 256, or 512, or 1024, or 2024, or 4048 queues.

4. Method according to one of the preceding claims, wherein the traffic shaping processor (41) comprises - besides a queue memory (411), the queue memory (411) storing a representation of the plurality of different queues (60), and comprising at least a reference information regarding data packets being part, respectively, of different queues (60) - a filled queue memory (412) regarding the plurality of different queues (60), the filled queue memory (412) indicating non-empty queues, wherein each queue of the plurality of different queues (60) is represented in the filled queue memory (412), wherein the representation regarding each queue especially corresponds to a binary digit whose value is dependent on whether the respective queue is empty or non-empty.

5. Method according to one of the preceding claims, wherein non-empty queues (60') are searched, regarding a considered group of queues, by means of detecting or deciding whether, in the filled queue memory (412), all the binary digits - corresponding to the considered group of queues - correspond to empty queues, or whether there are, in the filled queue memory (412), one or a plurality of binary digits - corresponding to the considered group of queues - whose value or values correspond to at least one non-empty queue (60'), wherein especially such a determination, regarding a considered group of queues, only requires one or two or three or four clock cycles of the traffic shaping processor (41) and/or wherein only one or two or three or four or five of six clock cycles of the traffic shaping processor (41) occur between the first and second point in time of the second step.

6. Method according to one of the preceding claims, wherein the natural number n, and/or the natural number m, and/or the natural number k
-- either corresponds to or is equal to the natural number p in which case the first group of queues (61) and/or the second group of queues (62) and/or the further group of queues (63) is or corresponds to an integral group of queues, having the natural number p of queues,
-- or corresponds to less than the natural number p of queues in which case the first group of queues (61) and/or the second group of queues (62) and/or the further group of queues (63) is or corresponds to a partial group of queues, wherein, within a partial group of queues, a further non-empty queue is searched by means of performing a masking operation when considering a corresponding integral group of queues, thereby ignoring a part of the queues of the integral group of queues, and considering only masked queues, wherein especially the masking operation is performed using a mask information, wherein the mask information comprises a binary digit for each queue of a considered group of p queues of which the considered partial group of queues is a part, wherein the value of the binary digits of the mask information for queues corresponding to the considered partial group of queues differs from the value of the binary digits of the mask information for queues not belonging to the considered partial group of queues.

7. Method according to one of the preceding claims, wherein the detection or decision - at the third point in time - whether one considered data packet is permitted or allowed, in view of the scheduling operation of the traffic shaping processor (41), to be sent or egressed from the traffic shaping processor (41), is dependent on a hierarchical scheduling or hierarchical rate-limiting, especially comprising 2 or 3 or 4 or 5 or 6 or 7 hierarchical layers or levels, wherein especially in case of the sending or egressing operation regarding the one considered data packet fails due to the scheduling operation of the traffic shaping processor (41), the scope of the failing reason - within the plurality of different queues (60) - is able to be determined by the traffic shaping processor (41) and/or its scheduling operation such that the next non-failing queue, or its corresponding queue identification information is able to be determined, leading to the generation or determination of the further initial queue identifier information (621).

8. Telecommunications network (100) for an improved traffic shaping and/or management of IP traffic in a packet processing system (10), especially as part of the telecommunications network (100), wherein the packet processing system (10) comprises a traffic shaping processor (41),
wherein each one of the data packets (50) handled by the traffic shaping processor (41) are assigned, respectively, to a specific queue out of a plurality of different queues (60),
wherein only a part of the plurality of different queues (60) are non-empty queues (60') or comprise at least one data packet being assigned to the respective queue, each one of the different queues (60) being specified by means of a queue identification information,
wherein, in order to provide for an improved traffic shaping and/or management of IP traffic, the telecommunications network (100) is configured such that a scheduling operation is performed, by the traffic shaping processor (41), prior to egressing the data packets (50), respectively, from the packet processing system (10), and the telecommunications network (100) is furthermore configured such that:
-- non-empty queues (60') are searched regarding a first group of queues (61) of the plurality of different queues (60), comprising a natural number n of queues, this first group of queues (61) having pieces of queue identifier information in a range from an initial queue identifier information (611) until a final queue identifier information (612),
-- the traffic shaping processor (41) detects or decides whether one or a plurality of non-empty queues (60') is part of the first group of queues (61), wherein,
-- if this is the case, a specific queue identification information of a considered non-empty queue (61') within the first group of queues (61) is identified, the considered non-empty queue (61') comprising at least one data packet or data packets according to a sequence of data packets within that queue (61'), and wherein
-- otherwise, a further non-empty queue is searched among the plurality of different queues (60),
-- regarding the considered non-empty queue (61') within the first group of queues (61), the traffic shaping processor (41) detects or decides whether one considered data packet of the at least one data packet or data packets of the considered non-empty queue (61') is permitted or allowed, in view of the scheduling operation of the traffic shaping processor (41), to be sent or egressed from the traffic shaping processor (41), wherein,
-- if this is the case, the considered data packet is sent by or egressed from the traffic shaping processor (41), and a further non-empty queue is searched among the plurality of different queues (60), wherein,
-- otherwise, the at least one considered data packet remains part of the considered non-empty queue (61'), and a further initial queue identifier information (621) is generated or determined, by the traffic shaping processor (41) or by means of performing the scheduling operation, and the first step is performed regarding a second group of queues (62) of the plurality of different queues (60) instead of the first group of queues (61) in order to search non-empty queues (60'), the second group of queues (62) comprising a further natural number m of queues, this second group of queues (62) having pieces of queue identifier information in a range from the further initial queue identifier information (621) until a further final queue identifier information (622).

9. Network node or network element, especially broadband network gateway element, for an improved traffic shaping and/or management of IP traffic in a packet processing system (10), especially as part of a telecommunications network (100), the network node or the network element comprising the packet processing system (10), wherein the packet processing system (10) comprises a traffic shaping processor (41),
wherein each one of the data packets (50) handled by the traffic shaping processor (41) are assigned, respectively, to a specific queue out of a plurality of different queues (60),
wherein only a part of the plurality of different queues (60) are non-empty queues (60') or comprise at least one data packet being assigned to the respective queue, each one of the different queues (60) being specified by means of a queue identification information,
wherein, in order to provide for an improved traffic shaping and/or management of IP traffic, the telecommunications network (100) is configured such that a scheduling operation is performed, by the traffic shaping processor (41), prior to egressing the data packets (50), respectively, from the packet processing system (10), and the telecommunications network (100) is furthermore configured such that:
-- non-empty queues (60') are searched regarding a first group of queues (61) of the plurality of different queues (60), comprising a natural number n of queues, this first group of queues (61) having pieces of queue identifier information in a range from an initial queue identifier information (611) until a final queue identifier information (612),
-- the traffic shaping processor (41) detects or decides whether one or a plurality of non-empty queues (60') is part of the first group of queues (61), wherein,
-- if this is the case, a specific queue identification information of a considered non-empty queue (61') within the first group of queues (61) is identified, the considered non-empty queue (61') comprising at least one data packet or data packets according to a sequence of data packets within that queue (61'), and wherein
-- otherwise, a further non-empty queue is searched among the plurality of different queues (60),
-- regarding the considered non-empty queue (61') within the first group of queues (61), the traffic shaping processor (41) detects or decides whether one considered data packet of the at least one data packet or data packets of the considered non-empty queue (61') is permitted or allowed, in view of the scheduling operation of the traffic shaping processor (41), to be sent or egressed from the traffic shaping processor (41), wherein,
-- if this is the case, the considered data packet is sent by or egressed from the traffic shaping processor (41), and a further non-empty queue is searched among the plurality of different queues (60), wherein,
-- otherwise, the at least one considered data packet remains part of the considered non-empty queue (61'), and a further initial queue identifier information (621) is generated or determined, by the traffic shaping processor (41) or by means of performing the scheduling operation, and the first step is performed regarding a second group of queues (62) of the plurality of different queues (60) instead of the first group of queues (61) in order to search non-empty queues (60'), the second group of queues (62) comprising a further natural number m of queues, this second group of queues (62) having pieces of queue identifier information in a range from the further initial queue identifier information (621) until a further final queue identifier information (622).

10. Program comprising a computer readable program code or hardware logic description, which, when executed on a computer and/or on a network node of a telecommunications network (100) and/or on a packet processing system (10) and/or on an ASIC, or in part on a network node of a telecommunications network (100) and in part on a packet processing system (10) and/or in part on an ASIC, causes the computer and/or the network node of a telecommunications network (100) and/or the packet processing system (10) or the ASIC to perform a method according one of claims 1 to 7.

11. Computer program or hardware logic description product for an improved traffic shaping and/or management of IP traffic in a packet processing system (10), the computer program product comprising a computer program stored on a storage medium, the computer program comprising program code which, when executed on a computer and/or on a network node of a telecommunications network (100) and/or on a packet processing system (10) and/or on an ASIC, or in part on a network node of a telecommunications network (100) and in part on a packet processing system (10) and/or in part on an ASIC, causes the computer and/or the network node of a telecommunications network (100) and/or the packet processing system (10) or the ASIC to perform a method according one of claims 1 to 7.
